# EUROPEAN PATENT SPECIFICATION

(11) **EP 2 142 859 B1**
(45) Date of publication and mention of the grant of the patent: **23.03.2016**
(21) Application number: 08738341.0
(22) Date of filing: 07.05.2008
(51) Int. Cl.: F24J 2/46

(54) **ENCLOSURE FOR A SOLAR COLLECTOR**
GEHÄUSE FÜR EINEN SONNENKOLLEKTOR
BÂTI POUR CAPTEUR SOLAIRE

(30) Priority: 08.05.2007 IL 18305207
(43) Date of publication of application: 13.01.2010
(73) Proprietor: Magen Eco Energy A.C.S. Ltd., Kibbutz Magen 85465 (IL)
(72) Inventor: PLASCHKES, Michael, Kibbutz Magen 85465 (IL)
(74) Representative: Wolf, Eckhard
(86) International application number: PCT/IL2008/000640
(87) International publication number: WO 2008/136006

(56) References cited:
- WO-A-01/69688
- DE-U1- 20 105 162
- DE-U1-202006 013 263
- JP-A- 59 081 448
- US-A- 3 943 911
- US-A- 4 397 305
- US-A- 4 503 840

## Description

### FIELD OF THE INVENTION

The present invention relates to solar collectors, and more particularly, to an enclosure for a solar collector.

A solar collector according to the preamble of claim 1 is described in document US-A-4397305.

### BACKGROUND OF THE INVENTION

Solar collector panels made of black plastic conduits interconnected by manifolds are known and mainly used for heating water to relatively low temperatures, e.g., up to 45°. Typically, the heated water in the hot water reservoir to which such panels are connected, is between 32°C - 35°C. The plastic panels are exposed to the ambient and even when there is no water flow between the panel conduits and the reservoir, the temperature of the panels does not exceed 80°C. Experience of use over the years has shown, that the plastic material of the panels is sufficiently durable, and the panels function satisfactorily over a period of even 15 to 20 years.

When, however, water temperature of e.g., 60°C in the reservoir is required, the collector panels have to be insulated from the ambient, and as per-se known, this is achieved by enclosures made of a metallic frame having a transparent top surface, i.e., a glass or plastic top surface. Under various conditions, the temperature inside the enclosure may reach even 140°C, which temperture is detrimental to the plastic panels which rapidly wear out, as well as to polyurethane insulation foam usually used in such enclosures.

It is therefore a broad object of the present invention to provide a collector having an enclosure substantially entirely made of plastic material, which functions satisfactorily over long periods of time, without wearing out due to the high temperature prevailing in the panel's enclosure.

It is a further object of the present invention to provide a solar collector substantially entirely made of plastic material and capable of heating water in a reservoir connected thereto to temperatures higher than 40°C, without wearing out over a long period of time.

It is still a further object of the present invention to provide a solar collector having an enclosure and being made substantially entirely of plastic material, having means for controlling the temperature inside the enclosure to a temperature which does not cause rapid deterioration of the plastic material of which the collector is made.

In accordance with the present invention there is provided a solar collector, comprising an enclosure having a bottom and side surfaces substantially made of plastic material and a transparent top surface, at least one panel unit composed of elongated conduits interconnected at each end by a manifold, said panel unit being movably affixed inside said enclosure and sized to freely expand and contract within said enclosure due to thermal changes, and said enclosure having at least one controllable air vent mechanism responsive to expansion and contraction of said panel unit.

### SUMMARY OF THE INVENTION

In accordance with the invention, there is provided a solar collector, comprising:
an enclosure having a bottom and side wall surfaces substantially made of plastic material and a transparent top surface;
at least one panel unit composed of elongated conduits interconnected at each end by a manifold;
said panel unit being movably affixed inside said enclosure and sized to freely expand and contract within said enclosure due to thermal changes, and
said enclosure having at least one controllable air vent mechanism responsive to expansion and contraction of said panel unit.

### BRIEF DESCRIPTION OF THE DRAWINGS

In order to understand the invention and to see how it may be carried out in practice, embodiments will now be described, by way of non-limiting example only, with reference to the accompanying drawings, in which:
**Fig. 1** is an isometric view of a solar collector, according to the present invention;
**Figs. 2A** **and** **2B** are enlarged views of an embodiment of a temperature control mechanism according to the present invention, showing the mechanism in two states, and
**Figs. 3A, 3B and 3C** schematically illustrate three dispositions of the control mechanism.

With specific reference now to the figures in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

### DETAILED DESCRIPTION OF EMBODIMENTS

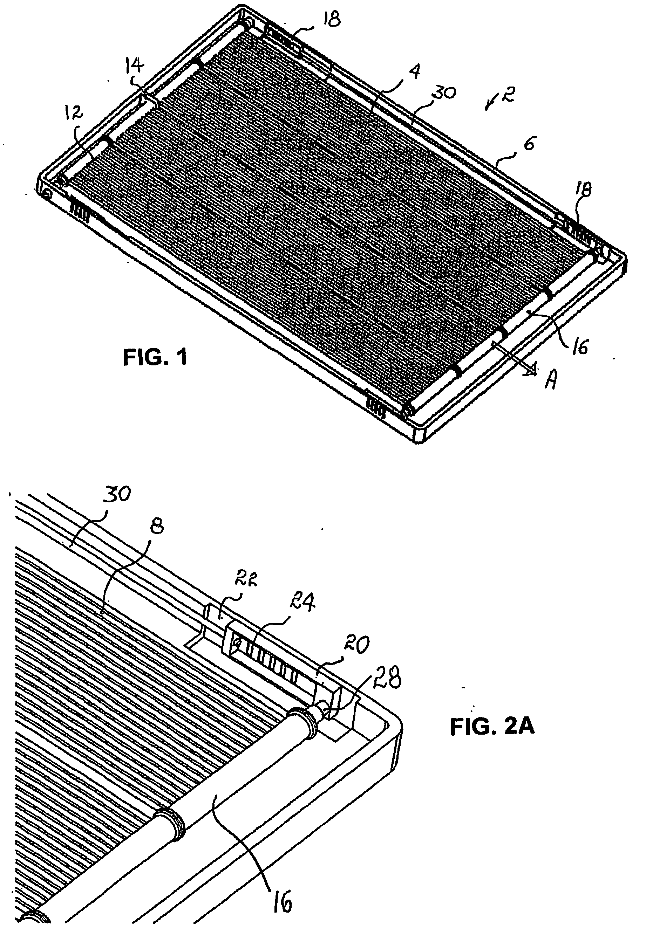

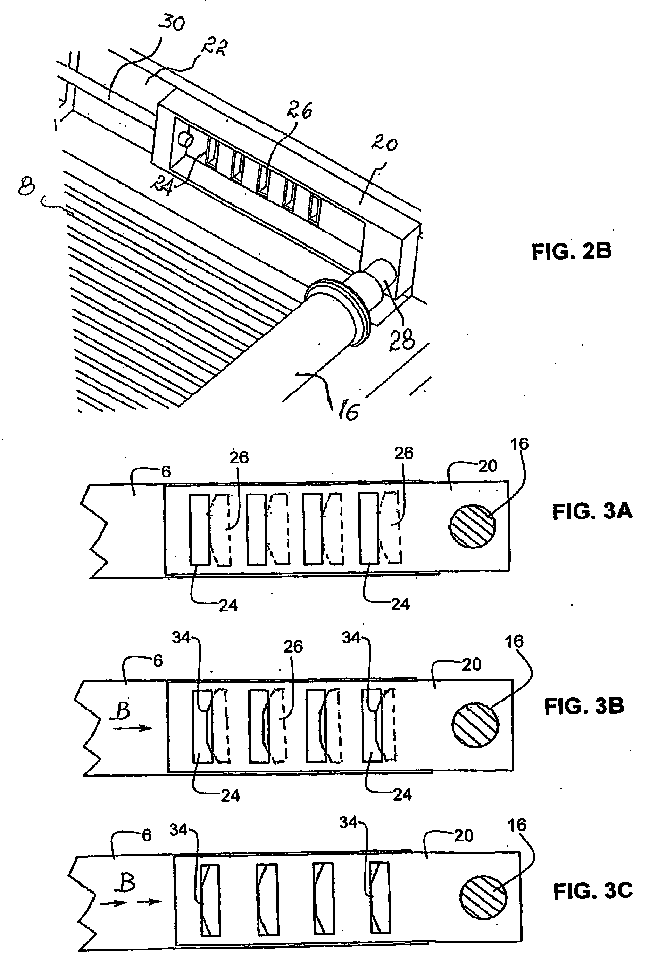

Referring to Fig. 1, there is illustrated a solar collector 2, according to the present invention, which is essentially composed of a panel unit 4 and an enclosure 6. The panel unit 4 made of plastic material, comprises at least one, or several, juxtaposed, elongated conduits 8 (Figs. 2A, 2B) interconnected at their ends by manifolds 12 and 16. The panel unit(s) 4 advantageously form a quadrilateral, and likewise, the enclosure 6, which is sized to accommodate the width of the panel unit only with a small clearance, but the length of the panel unit with a substantial clearance, so as to allow free expansion of the panel unit, in the direction as indicated by arrow A. The manifold 12, or the panel unit adjacent thereto, is fixed to the enclosure 6 by any suitable per-se known manner, e.g., by a hook 14, so that thermal expansion and contraction movements of the panel unit 4, take place at the side of the manifold 16.

The enclosure 6 is further provided with at least one, preferably several, air vent mechanisms 18, the size of the venting openings being controlled with respect to the heat generated inside the enclosure. This is accomplished by operationally linking the panel unit 4 to the mechanism 18, so as to effect the opening and closing of the vents' apertures as a function of the expansion and contraction linear movements of the panel unit 4. As seen in Figs. 2A, 2B, 3A, 3B and 3C, the air vent mechanism 18 includes a block 20 slidingly coupled inside a recess 22 to an apertured section of an inner side wall of the enclosure 6. The block 20 has several openings 24, the form and size of which can be chosen. Likewise, the form and size of the apertures 26 made in the enclosure's sidewall section, can be chosen. In the shown example, the apertures 26 are trapezoidal (Figs. 3A to 3C), while triangular or rectangular apertures can just as well be used. The edge 28 of the manifold 16 is attached to the block 20 at one end portion, thereby linking the panel unit 4 to the air vent mechanism 18. If an additional air vent mechanism 18 is provided on the same side of the enclosure 6, the two mechanisms 18 are linked by a rod 30 attached at its ends to each of the mechanisms' blocks 20, so that movement of block 20 induced by the expansion or contraction of the panel unit 4 including the manifold 16, will cause an identical or corresponding sliding movement of block 20 of mechanism 18 located adjacent manifold 12.

Referring now Figs. 3A to 3C, there is illustrated, in greater detail the mechanism 18 showing the section of the side wall of the enclosure 6 made with spaced-apart trapezoidal apertures 26, the block 20 as aligned with the apertures 32 and the cross-section of the end of the manifold 16. The direction of expansion of the panel unit 4 with the manifold 16 is indicated by arrows B. As seen in Fig. 3A, at low temperatures, the openings 24 and apertures 26 overlap. At a temperature of, say, 60° prevailing inside the enclosure 6 (Fig. 3B), the panel unit 4 is thermally expanded to a small degree, thus sliding the block 20 to a corresponding small degree, forming relatively small apertures 34 (Fig. 3A). As the heat inside the enclosure rises, e.g., to 80°, the panel unit 4 further expands, the manifold 16 is further displaced and slides the block 20 in the direction of arrows B, correspondingly enlarging the size of apertures 34. At a temperature of e.g., 100°C inside the enclosure 6 (Fig. 3C), the apertures 34 are at their maximal size, allowing maximal ventilation for maintaining the temperature inside the enclosure at a level not exceeding about 120°. For a more effective ventilation inside the enclosure, it is advised to form one or more simple openings (38, Fig. 1) at the side of the enclosure opposite the air vent mechanisms 18.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. A solar collector (2) comprising:
an enclosure (6) having a bottom and side wall surfaces substantially made of plastic material and a transparent top surface;
at least one panel unit (4) composed of elongated conduits (8) interconnected at each end by a manifold (12,16); and
said enclosure (6) having at least one controllable air vent mechanism (18); **characterised in that** said at least one panel unit (4) is movably affixed inside said enclosure (6) and sized to freely expand and contract within said enclosure (6) due to thermal changes, and **in that** said at least one controllable air vent mechanism is responsive to expansion and contraction of said at least one panel unit.

2. The solar collector according to claim 1, wherein said enclosure (6) is quadrilateral.

3. The solar collector according to claim 1 or 2, wherein the at least one panel unit is movably affixed to said enclosure (6) at, or adjacent to, one end thereof.

4. The solar collector according to any one of claims 1 to 3, wherein said at least one air vent mechanism (18) is made in one of said side wall surfaces of the enclosure.

5. The solar collector according to any one of claims 1 to 4, wherein said at least one air vent mechanism (18) is at least indirectly connected to a manifold (16) of said panel unit.

6. The solar collector according to claim 1, wherein there are provided two air vent mechanisms (18), each located adjacent to one manifold (16) of said panel unit and being operationally, mechanically interconnected.

7. The solar collector according to any one of claims 1 to 5, wherein said at least one air vent mechanism (18) comprises at least one first opening (26) made in the side surface of said enclosure (6) and at least a second opening (24) made in a block (20) slidingly movable in relation to said at least one first opening (26).

8. The solar collector according to claim 7, wherein one of said manifolds (16) is at least indirectly connected to said sliding block (20).

9. The solar collector according to any one of claims 1 to 8, further comprising at least one opening made in a side surface of said enclosure (6) opposite to said at least one air vent mechanism (18).

## Patentansprüche

1. Sonnenkollektor (2), umfassend: ein Gehäuse (6) mit einem Boden und Seitenwandflächen, die im Wesentlichen aus Kunststoffmaterial bestehen, und eine transparente Deckelfläche; mindestens eine Paneeleinheit (4) bestehend aus langgestreckten Leitungen (8), die an jedem Ende mit einem Verbindungsstück (12, 16) miteinander verbunden sind; wobei das Gehäuse (6) mindestens einen steuerbaren Belüftungsmechanismus (18) aufweist, **dadurch gekennzeichnet, dass** die mindestens eine Paneeleinheit (4) beweglich in dem Gehäuse (6) befestigt ist und derart bemessen ist, dass sie sich aufgrund von Temperaturschwankungen frei ausdehnen und kontrahieren kann, und dass der mindestens eine steuerbare Belüftungsmechanismus auf die Ausdehnung und Kontraktion der mindestens einen Paneeleinheit reagiert.

2. Sonnenkollektor nach Anspruch 1, **dadurch gekennzeichnet, dass** das Gehäuse (6) rechteckig ausgebildet ist.

3. Sonnenkollektor nach Anspruch 1 oder 2, **dadurch gekennzeichnet, dass** die mindestens eine Paneeleinheit im Bereich eines Endes des Gehäuses (6) beweglich befestigt ist.

4. Sonnenkollektor nach einem der Ansprüche 1 bis 3, **dadurch gekennzeichnet, dass** der mindestens eine Belüftungsmechanismus (18) in einer der Seitenwandflächen des Gehäuses vorgesehen ist.

5. Sonnenkollektor nach einem der Ansprüche 1 bis 4, **dadurch gekennzeichnet, dass** der mindestens eine Belüftungsmechanismus (18) zumindest indirekt mit einem Verbindungstück (16) der Paneeleinheit verbunden ist.

6. Sonnenkollektor nach Anspruch 1, **dadurch gekennzeichnet, dass** zwei Belüftungsmechanismen (18) vorgesehen sind, von denen ein jeder benachbart zu einem Verbindungsstück (16) der Paneeleinheit angeordnet ist und die mechanisch in Wirkverbindung miteinander stehen.

7. Sonnenkollektor nach einem der Ansprüche 1 bis 5, **dadurch gekennzeichnet, dass** der mindestens eine Belüftungsmechanismus (18) mindestens eine erste Öffnung (26) aufweist, die in der Seitenwandfläche des Gehäuses (6) vorgesehen ist, und mindestens eine zweite Öffnung (24), die in einem Block (20) vorgesehen ist, der gleitend verschiebbar bezüglich der mindestens einen ersten Öffnung (26) ist.

8. Sonnenkollektor nach Anspruch 7, **dadurch gekennzeichnet, dass** eines der Verbindungsstücke (16) zumindest indirekt mit dem gleitenden Block (20) verbunden ist.

9. Sonnenkollektor nach einem der Ansprüche 1 bis 8, **gekennzeichnet durch** mindestens eine Öffnung in einer Seitenwandfläche des Gehäuses (6), die dem mindestens einen Belüftungsmechanismus (18) gegenüber liegt.

## Revendications

1. Collecteur solaire (2), comprenant :
un boîtier (6) ayant des surfaces de parois latérales et de fond globalement réalisées en matière plastique et une surface supérieure transparente,
au moins une unité de panneau (4) composée de conduits allongés (8) interconnectés à chaque extrémité par un distributeur (12, 16), et
ledit boîtier (6) ayant au moins un mécanisme d'évent contrôlable (18), **caractérisé en ce que** ladite unité de panneau (4) est fixée de manière mobile à l'intérieur dudit boîtier (6) et est dimensionnée pour se dilater et
se contracter librement dans ledit boîtier (6) en raison de changements thermiques, et **en ce que** ledit au moins un mécanisme d'évent contrôlable réagit à la dilatation et à la contraction de ladite au moins une unité de panneau.

2. Collecteur solaire selon la revendication 1, dans lequel ledit boîtier (6) est quadrilatéral.

3. Collecteur solaire selon la revendication 1 ou 2, ladite au moins une unité de panneau est fixée de manière mobile dans ledit boîtier (6) au niveau d'une extrémité de celui-ci, ou à une position adjacente à celle-ci.

4. Collecteur solaire selon l'une quelconque des revendications 1 à 3, dans lequel ledit au moins un mécanisme d'évent (18) est réalisé dans l'une desdites surfaces de parois latérales du boîtier.

5. Collecteur solaire selon l'une quelconque des revendications 1 à 4, dans lequel ledit au moins un mécanisme d'évent (18) est au moins indirectement connecté à un distributeur (16) de ladite unité de panneau.

6. Collecteur solaire selon la revendication 1, dans lequel sont fournis deux mécanismes d'évent (18), situés chacun à une position adjacente à un distributeur (16) de ladite unité de panneau et étant en fonctionnement, interconnectés mécaniquement.

7. Collecteur solaire selon l'une quelconque des revendications 1 à 5, dans lequel ledit au moins un mécanisme d'évent (18) comprend au moins une première ouverture (26) réalisée dans la surface latérale dudit boîtier (6) et au moins une deuxième ouverture (24) réalisée dans un bloc (20) mobile en coulissement par rapport à ladite au moins une première ouverture (26).

8. Collecteur solaire selon la revendication 7, dans lequel l'un desdits distributeurs (16) est au moins indirectement connecté audit bloc (20) coulissant.

9. Collecteur solaire selon l'une quelconque des revendications 1 à 8, comprenant en outre au moins une ouverture réalisée dans une surface latérale dudit boîtier (6) opposée audit au moins un mécanisme d'évent (18).
